# EUROPÄISCHE PATENTANMELDUNG

(11) **EP 3 922 425 A1**
(43) Veröffentlichungstag der Anmeldung: **15.12.2021**
(21) Anmeldenummer: 21177249.6
(22) Anmeldetag: 01.06.2021
(51) Int. Cl.: B28B 23/00, E04G 21/18

(54) **INSTALLATIONSTEIL FÜR DEN BETONBAU**

(30) Priorität: 10.06.2020 DE 102020115520
(71) Anmelder: Kaiser GmbH & Co. KG, 58579 Schalksmühle (DE)
(72) Erfinder: SIEBEKING, Thomas, 58513 Lüdenscheid (DE); SCHÜTZE, Andreas, 45659 Recklinghausen (DE)
(74) Vertreter: Rentsch Partner AG

(57) **Zusammenfassung**

Die vorliegende Erfindung umfasst ein Installationsteil (1) zum Einbau in einem zu giessenden Betonsegment, ein Verfahren zur Herstellung eines Betonsegments mit einem entsprechenden Installationsteil (1) und ein Betonsegment mit einem Installationsteil (1). Das Installationsteil (1) umfasst einen Installationskörper (2) zur Einführung und/oder Durchführung von Installationsleitungen mit mindestens einer Seitenwand, welche sich in eine erste Richtung erstreckt. Des Weiteren umfasst das Installationsteil (1) mindestens ein Befestigungselement (3) zur Befestigung des Installationskörpers (2) an einer Armierung des zu giessenden Betonsegments, wobei das Befestigungselement (3) in einem montierten Zustand seitlich von dem Installationskörper (2) absteht. Das mindestens eine Befestigungselement (3) wird über eine Verbindungsstruktur (6) mit dem Installationskörper (2) wirkverbunden, wobei das Befestigungselement (3) an mehreren alternativen Positionen mit der Verbindungsstruktur (6) wirkverbindbar ist und die mehreren alternativen Positionen in die erste Richtung hintereinander angeordnet sind.

## Beschreibung

### TECHNISCHES GEBIET

Die Erfindung betrifft ein Installationsteil für ein Betonsegment, ein Betonsegment sowie ein Verfahren zur Herstellung eines Betonsegments.

### HINTERGRUND, STAND DER TECHNIK

In Bauwerken werden für das Anbringen elektrischer Schalter, Steckdosen, Lampen, Apparate oder für Verzweigungen an den dazu vorgesehenen Stellen im Gebäude Installationsteile verwendet, welche häufig einbetoniert werden. Der Einbau der Installationsteile in einem Betonsegment, wie einer Betonwand, einem Betonboden oder einer Betondecke, erfolgt vor dem Betonieren des Betonsegments. In der Regel wird das Installationsteil hierzu an einem Schalungselement und/oder einer Armierung vor dem Giessen des Betonsegmentes positioniert und befestigt. Die Installationsteile dienen typischerweise zur Befestigung von Plastikrohren, insbesondere Wellrohren, zum Ein- oder Durchführen von Installationsleitungen. Je nach Ausgestaltung kann das Installationsteil ebenfalls einen Installationsraum zur Aufnahme von Elektroinstallationen, wie Steckdosen oder dergleichen, umfassen.

Variable Betonsegmentdicken, bzw. variable Betondeckungen über der Armierung, erschweren hierbei die Positionierung der Installationsteile zu einer vorgesehenen Betonsegmentoberfläche des zu giessenden Betonsegmentes. Unter Betondeckung wird die Stärke des Betons von der Armierung zur Betonsegmentoberfläche verstanden. Für einen festen Sitz der Installationsteile, insbesondere an einer Betonsegmentoberfläche, an welcher kein Schalungselement vorhanden ist, müssen herkömmliche Installationsteile zudem oftmals aufwendig positioniert und befestigt werden.

### BESCHREIBUNG DER ERFINDUNG

Eine Aufgabe der Erfindung besteht darin ein Installationsteil zur vereinfachten Montage an einer Armierung bereitzustellen. Eine weitere Aufgabe der Erfindung ist es eine vereinfachte Positionierung eines Installationsteils an einer Betonsegmentoberfläche eines zu giessenden Betonsegmentes bereitzustellen.

Die vorliegende Erfindung betrifft ein Installationsteil zum Einbau in einem zu giessenden Betonsegment, wie beispielsweise einer Betonwand, einem Betonboden oder eine Betondecke. Das Installationsteil umfasst einen Installationskörper zur Einführung und/oder Durchführung von Installationsleitungen und mindestens ein Befestigungselement, vorzugsweise zwei Befestigungselemente, zur Befestigung des Installationskörpers an einer Armierung des zu giessenden Betonsegments.

Der Installationskörper kann hierbei beispielsweise eine Installationsdose, ein Endübergangsteil, eine Haltevorrichtung für Rohre oder o.ä. sein. Der Installationskörper weist mindestens eine Seitenwand auf, welche sich mit Vorteil zumindest bereichsweise in eine erste Richtung erstreckt. Die erste Richtung ist hierbei im montierten Zustand des Installationsteils in einem Betonsegment normal zu einer Betonsegmentoberfläche des Betonsegments ausgerichtet.

Im Fall einer Installationsdose als Installationskörper kann diese eine röhrenförmige Seitenwand aufweisen, welche einen Installationsraum umgibt. Die röhrenförmige Seitenwand erstreckt sich im Wesentlichen in die erste Richtung. Die röhrenförmige Seitenwand kann im Querschnitt in die erste Richtung mehreckig oder rund ausgestaltet sein. In einer ersten Variante der Installationsdose kann die röhrenförmige Seitenwand eine (rückseitig) angeordnete Montageöffnung beranden. Die Seitenwand kann hierbei mindestens einen (rückseitig) angeordneten, entlang mindestens einer definierten Kontur heraustrennbaren Wandbereich aufweisen, welcher bereichsweise an die Montageöffnung anschliesst. In einem herausgetrennten Zustand des Wandbereiches bildet sich eine entlang der Kontur und an die Montageöffnung anschliessende Einführöffnung zum Einführen eines Installationsrohres aus der ersten Richtung in den Installationsraum aus. Insbesondere kann das Installationsrohr quer zu dessen Erstreckungsrichtung aus der ersten Richtung in die Einführöffnung eingeführt werden. Gegenüberliegend der Montageöffnung kann eine Installationsöffnung angeordnet sein. Die Installationsdose kann einen (ersten) Deckel zum Verschliessen der vorderseitigen Installationsöffnung umfassen. Je nach Ausgestaltung kann der (erste) Deckel ein frontales Ende mit einer Frontfläche, wie weiter unten beschrieben, umfassen. Die Installationsdose kann weiterhin einen (zweiten) Deckel zum Verschliessen der rückseitigen Montageöffnung umfassen. Die genaue Ausgestaltung der ersten Variante der Installationsdose ist näher in der EP3584898A1 beschrieben. In einer zweiten Variante der Installationsdose kann die röhrenförmige Seitenwand rückseitig in einen Boden der Installationsdose übergehen, welche gemeinsam den Installationsraum umgeben. Gegenüberliegend vom Boden ist eine Installationsöffnung angeordnet, welche optional von einem Deckel verschliessbar ist. Je nach Ausgestaltung kann der Deckel ein frontales Ende mit einer Frontfläche, wie weiter unten beschrieben, umfassen. An der Seitenwand und/oder dem Boden können Einführöffnungen zum Einführen von Installationsrohren in den Installationsraum angeordnet sein. Die Einführöffnungen können in einem initialen Zustand (vor dem Einführen der Installationsrohre) durch einen heraustrennbaren Wandbereich verschlossen sein.

In einer weiteren Ausführungsform des Installationskörpers kann dieser ebenfalls als Endübergangsteil ausgebildet sein. Das Endübergangsteil kann insbesondere dazu ausgelegt sein, Installationsleitungen von einem Betonsegment in ein benachbartes Betonsegment, insbesondere ein bündig anschliessendes Betonsegment, zu überführen. Das Endübergangsteil weist hierzu mit Vorteil eine Frontfläche auf, welche im eingegossenen Zustand an mindestens einer Betonsegmentoberfläche anliegt. Alternativ kann die Frontfläche im eingegossenen Zustand ebenfalls, wie weiter unten beschrieben, parallel zur Betonsegmentoberfläche angeordnet sein, beispielsweise 1 mm - 5 mm unterhalb der Betonsegmentoberfläche. Die Frontfläche kann ebenfalls zur Anlage an einem weiteren Übergangselement angeordnet im benachbarten Betonsegment ausgelegt sein. Das Endübergangsteil kann einen sich von einer ersten zu einer zweiten Mündung erstreckenden röhrenförmigen Grundkörper aufweisen. Die erste Mündung kann hierbei in der Frontfläche angeordnet sein. Die Frontfläche ist in der Regel normal zur ersten Richtung ausgerichtet. Von der ersten Mündung kann sich der röhrenförmige Grundkörper zumindest bereichsweise in die erste Richtung erstrecken. In der Frontfläche oder von dieser umgeben kann ein heraustrennbarer Bereich angeordnet sein, welcher den röhrenförmigen Grundkörper, respektive die erste Mündung, initial verschliesst. Nach dem Heraustrennen können Installationsleitungen durch den Grundkörper durchgeführt werden. Im Bereich der ersten und/oder der zweiten Mündung können Rastelemente zur Verrastung eines Rohrkrümmers oder eines Installationsrohres angeordnet sein. Das Endübergangsteil umfasst mindestens eine Seitenwand, welche sich im Wesentlichen in die erste Richtung erstreckt und an welcher ein Befestigungselement über eine Verbindungsstruktur wirkverbindbar ist. Die mindestens eine Seitenwand kann an dem röhrenförmigen Grundkörper angeordnet sein. Ebenfalls denkbar ist, dass die mindestens eine Seitenwand von dem röhrenförmigen Grundkörper und/oder der Frontfläche abragt. Bevorzugt steht die mindestens eine Seitenwand rechtwinkelig zu der Frontfläche ab.

Das mindestens eine Befestigungselement zur Befestigung des Installationskörpers an der Armierung steht in einem montierten Zustand seitlich, insbesondere flügelförmig, von dem Installationskörper ab. Dies umschliesst Ausführungsformen bei denen das mindestens eine Befestigungselement senkrecht zur erstem Richtung oder schräg zur ersten Richtung ausgerichtet ist. Mit Vorteil umfasst das Installationsteil zwei Befestigungselemente, welche an gegenüberliegenden Seiten des Installationskörpers seitlich abstehen. Das Befestigungselement kann je nach Ausgestaltung mindestens einen Steg zur Auflage auf der Armierung aufweisen. Der mindestens eine Steg kann zumindest bereichsweise in eine Erstreckungsrichtung des Steges profiliert sein. Je nach Ausgestaltung kann die Erstreckungsrichtung des Steges senkrecht zur ersten Richtung liegen. Alternativ oder ergänzend kann der Steg Versteifungsrippen umfassen. Der Steg kann beispielsweise eine erste und eine zweite Wandung aufweisen, welche sich in die Erstreckungsrichtung des Steges erstrecken. Zwischen der ersten und zweiten Wandung können Versteifungsstrukturen angeordnet sein. Mit Vorteil ist das mindestens eine Befestigungselement derart ausgestaltet, dass dieses (im montierten Zustand) keinen Hinterschnitt in die erste Richtung aufweist. Auf diese Weise kann der gegossene Beton ungehindert durch das Befestigungselement fliessen und/oder hochsteigen. Auf dem Steg kann mindestens eine Aufnahme, wie z.B. eine runde oder omegaförmige Aussparung oder einer Mulde, zur bereichsweisen Aufnahme der Armierung vorgesehen sein, welche die Positionierung des Installationsteils auf der Armierung erleichtert. Bei einem Installationsteil mit zwei Befestigungselementen an gegenüberliegenden Seitenwänden des Installationskörpers weisen die Aufnahmen der jeweiligen Befestigungselemente im montierten Zustand vorteilhafterweise einen Abstand von 120 mm - 200 mm, insbesondere 150 mm auf. Mit Vorteil ist der Steg aus der ersten Richtung betrachtet U-förmig oder O-förmig ausgestaltet und kann an einem proximalen Ende mit der Verbindungsstruktur wirkverbunden werden. Bei einem U-oder O-förmigen Steg kann dieser im montierten Zustand an mindestens zwei Stellen auf der Armierung aufliegen, und ggf. hierzu an der entsprechenden Stelle je eine Aufnahme aufweisen. In einer bevorzugten Form ist der Steg aus der ersten Richtung betrachtet O-förmig ausgestaltet und weist eine äussere (O-förmige) und eine innere (O-förmige) Wandung auf. Zwischen der äusseren und der inneren Wandung, welche sich in die erste Richtung erstrecken, können Versteifungsrippen angeordnet sein. Des Weiteren können zwischen der äusseren und der inneren Wandung hohlzylinderförmige Hülsen angeordnet sein. Durch diese können z.B. Drähte zum Verrödeln der Befestigungselemente an der Armierung angebracht werden.

Das mindestens eine Befestigungselement kann über eine Verbindungsstruktur mit dem Installationskörper wirkverbunden werden. Je nach Ausgestaltung und Art des Installationskörpers kann die Verbindungsstruktur separat ausgestaltet sein. Beispielsweise kann die (separate) Verbindungsstruktur an dem Installationskörper wirkverbindbar, insbesondere anrastbar, sein. Mit Vorteil ist die Verbindungsstruktur aus der ersten Richtung anrastbar. Hierzu kann an dem Installationskörper, insbesondere an der Seitenwand des Installationskörpers, ein (erstes) Rastelement angeordnet sein, welches mit einem (ersten) Gegenrastelement angeordnet an der Verbindungsstruktur wirkverbindbar ist. Das Gegenrastelement angeordnet an der Verbindungsstruktur kann beispielsweise mindestens einen Rasthaken aufweisen. In einer möglichen Ausführungsform kann an der Seitenwand des Installationskörpers eine Vertiefung in die erste Richtung vorgesehen sein, in welche die Verbindungsstruktur in einem montierten Zustand zumindest bereichsweise eingreift und verrastet. Ebenfalls denkbar sind jedoch auch andere Befestigungsarten. Die Verbindungsstruktur kann jedoch auch integral mit dem Installationskörper ausgestaltet sein. Beispielsweise kann die Verbindungsstruktur an den Installationskörper angeformt sein.

Das Befestigungselement ist an mehreren alternativen Positionen mit der Verbindungsstruktur wirkverbindbar. Auf diese Weise kann das Installationsteil an der Armierung, derart befestigt werden, dass in einem eingegossenen Zustand des Installationsteils in dem Betonsegment, dieses einen vorgegebenen (ersten) Abstand von einem frontalen Ende, insbesondere einer Frontfläche, zu der Betonsegmentoberfläche aufweist, respektive von einer Betonschicht mit einer vorgegebenen Dicke bedeckt ist. Diese vorgegebene Dicke (respektive dieser erste Abstand) beträgt mit Vorteil 1 mm - 5 mm, insbesondere 2mm. Eine derart bemessene Dicke hat den Vorteil, dass die Betonschicht leicht zu entfernen ist um an das darunterliegende Installationsteil zu gelangen.

Dem Installationsteil, respektive dem Installationskörper, kann somit eine Montageebene zugewiesen werden, welche im montierten Zustand in der Betonsegmentoberfläche liegt. Diese liegt in der Regel 1 mm - 5 mm, insbesondere 2 mm über dem frontalen Ende des Installationskörpers. Das frontale Ende kann durch eine Frontfläche gebildet werden, welche normal zur ersten Richtung ausgerichtet ist. Die Montageebene liegt in diesem Fall im Wesentlichen parallel zu der Frontfläche. In der Frontfläche oder von dieser umgeben kann ein heraustrennbarer Bereich angeordnet sein. Nach dem Entfernen der Betonschicht über dem heraustrennbaren Bereich, kann dieser herausgetrennt werden, sodass Installationen und/oder Installationsleitungen in das Installationsteil eingeführt werden können.

Die mehreren alternativen Positionen sind mit Vorteil in die erste Richtung hintereinander angeordnet, bzw. die mehreren alternativen Positionen können an unterschiedlichen Positionen in die erste Richtung angeordnet sein. Die mehreren alternativen Positionen können diskrete Positionen sein. Die Verbindungsstruktur kann hierzu mehrere Steckplätze zur bereichsweisen Aufnahme des Befestigungselements, insbesondere des proximalen Endes des Befestigungselementes, aufweisen, wobei jeder Steckplatz eine der alternativen Positionen entspricht. Mit Vorteil sind hierbei mehr als zwei, insbesondere mindestens vier, Steckplätze vorhanden. Die mindestens vier Steckplätze können derart angeordnet sein, dass ein Befestigungselement in einem montierten Zustand an der Verbindungsstruktur, respektive dem Installationskörper, einen zweiten Abstand von einer Anlagefläche (des Befestigungselementes an der Armierung) zu der Montageebene des Installationskörpers ausbildet. Entsprechend wird ein dritter Abstand von einer Anlagefläche des Befestigungselementes zu dem frontalen Ende des Installationskörpers ausgebildet. Die Montageebene liegt im montierten Zustand des Installationsteils in dem Betonsegment in der Betonsegmentoberfläche. Der zweite Abstand der Anlagefläche zur Montageebene kann je nach ausgewählten Steckplatz und Orientierung des Befestigungselementes zwischen 15 mm bis 40 mm, insbesondere 20 mm, 25 mm, 30 mm oder 35 mm, entsprechen. Diese Werte entsprechen den Höhen von Betondeckungen herkömmlicher Betonsegmente. Der dritte Abstand der Anlagefläche zu dem frontalen Ende kann somit je nach ausgewählten Steckplatz insbesondere 18mm, 23mm, 28mm oder 33mm entsprechen.

Um das Installationsteil im eingegossenen Zustand in dem Betonsegment ausfindig zu machen, kann das Installationsteil eine Anzeigevorrichtung, z.B. in Form mindestens eines Wimpels, aufweisen, welche die Position der unterliegenden Installationsdose anzeigt. Die Anzeigevorrichtung steht mit Vorteil von dem frontalen Ende des Installationskörpers ab und erstreckt sich durch die oben beschriebene Montageebene des Installationsteils. Die Anzeigevorrichtung ragt somit (zumindest bereichsweise) im eingegossenen Zustand des Installationsteils aus der Betonsegmentoberfläche heraus.

Mit Vorteil kann das Befestigungselement in einem jeweiligen Steckplatz in einer ersten und einer zweiten Steckposition befestigt werden. In der zweiten Steckposition ist das Befestigungselement hierbei im Vergleich zu der ersten Steckposition um 180° um eine Längsachse des Befestigungselementes gedreht. Mit Vorteil erstreckt sich die Längsachse des Befestigungselements von dem proximalen Ende des Befestigungselementes zu einem diesem gegenüberliegenden distalen Ende des Befestigungselementes. In einer bevorzugten Variante des Installationsteils steht die Längsachse des Befestigungselementes senkrecht zur ersten Richtung.

Die Steckplätze können von lamellenartigen Abtrennungen separiert sein. In den jeweiligen Steckplätzen kann mindestens ein Rastmittel zur Verrastung des Befestigungselements mit der Verbindungsstruktur angeordnet sein. Beispielsweise können diese an den jeweiligen Abtrennungen angeordnet sein. Alternativ kann das Befestigungselement ebenfalls kontinuierlich in Bezug zu der Verbindungsstruktur von einer Position in die nächste Position verschoben werden. Hierzu kann die Verbindungsstruktur eine Führungsschiene aufweisen. In der Führungsschiene können Arretiermittel angeordnet sein zum Fixieren des Befestigungselementes in der jeweiligen Position. Neben den alternativen Positionen kann weiterhin eine Skala angeordnet sein. Diese kann einem an dieser Position angebrachten Befestigungselement den oben beschriebenen zweiten Abstand zuordnen.

In einer bevorzugten Ausführungsform des Befestigungselementes weist dieses mindestens ein (zweites) Rastelement zur Verrastung mit einem Umgreifungselement auf. Dieses umgreift in einem montierten Zustand des Installationsteils an der Armierung einen Bereich der Armierung zumindest teilweise. Das Umgreifungselement kann separat ausgestaltet sein oder einstückig mit dem Befestigungselement ausgeführt sein. Für die Umgreifung der Armierung kann das Umgreifungselement mindestens eine flexible Zunge umfassen. Die flexible Zunge kann an einem ersten Ende angeformt sein und an einem zweiten freien Ende ein (zweites) Gegenrastelement zur Verrastung mit dem (zweiten) Rastelement umfassen. Mit Vorteil ist das Umgreifungselement aus der ersten Richtung innerhalb einer Kontur des Befestigungselementes angeordnet.

In einer Ausführungsform ist das Umgreifungselement an einem ersten Ende am Befestigungselement angeformt. An einem zweiten Ende des Umgreifungselement weist dieses mindestens ein Gegenrastelement zur Verrastung mit dem Rastelement angeordnet am Befestigungselement auf. Zur Montage kann die flexible Zunge des Umgreifungselement, angeordnet zwischen dem ersten und dem zweiten Ende des Umgreifungselement, um einen Bereich der Armierung gelegt werden und mit dem Gegenrastelement an dem Rastelement verrastet werden. Je nach Ausgestaltung können zwischen dem ersten und dem zweiten Ende, d.h. entlang der flexiblen Zunge, weitere Gegenrastelemente angerordnet sein. Das erste Ende des Umgreifungselement als auch das Rastelement können auf dem mindestens einen Steg angeordnet ist sein. Mit Vorteil ist das Umgreifungselement und das Rastelement zwischen dem oben beschrieben O- oder U-förmigen Steg auf einem Mittelsteg angeordnet, welcher an mindestens einer Stelle an dem O- oder U-förmigen Steg angeformt ist. Mit Vorteil ist der Mittelsteg mit einem Ende im Bereich des proximalen Endes des Befestigungselementes an dem O- oder U-förmigen Steg angeformt. Weitere Querstege zwischen dem O- oder U-förmigen Steg und dem Mittelsteg sind denkbar.

In einer weiteren möglichen Ausführungsform ist das Umgreifungselement U- förmig ausgestaltet. In diesem Fall weist das Umgreifungselement ein Querelement und zwei Schenkel auf. An seinen Schenkeln ist jeweils mindestens ein Gegenrastelement angeordnet zur Verrastung mit zwei Rastelementen angeordnet am Befestigungselement. Die beiden Rastelemente können an einem Mittelsteg, wie oben beschrieben, angeordnet sein. Das Umgreifungselement kann separat ausgestaltet sein oder über ein Band oder dergleichen am restlichen Befestigungselement angeformt sein. An dem Band kann eine Dünnstelle zum Abtrennen des Umgreifungselement angeordnet sein.

Bei einer Ausgestaltung des Befestigungselementes mit einem Umgreifungselement auf einem Mittelsteg und einer Aufnahme auf dem mindestens einen (weiteren) Steg, ist das Umgreifungselement mit Vorteil in eine Erstreckungsrichtung des Befestigungselementes auf Höhe der Aufnahme zur Auflage an der Armierung angeordnet. Im Fall eines O-förmigen Steges mit zwei Aufnahmen ist das Umgreifungselement mit Vorteil zwischen den beiden Aufnahmen (respektive auf gleicher Höhe wie diese) angeordnet. Wenn das Umgreifungselement an das Befestigungselement angeformt ist, steht dieses mit Vorteil in die gleiche Richtung von dem Befestigungselement ab, in welche auch die mindestens eine Aufnahmen angeordnet ist.

Die Erfindung betrifft weiterhin ein Verfahren zum Herstellen eines Betonsegmentes mit mindestens einem Installationsteil. Das Verfahren umfasst das Bereitstellen einer Form zum Giessen des Betonsegmentes. Die Form umfasst in der Regel einen Formboden und mindestens eine Formseitenwand. Für die Beschreibung der Verfahrensschritte ist hierbei eine zweite Richtung normal zum Formboden definiert. Die Form kann gegenüberliegend des Formbodens offen sein. Dies bedeutet, dass die Form an dieser Seite keine Formwandung (respektive kein Schalungselement) aufweist. Bei dieser Ausgestaltung kann der Beton von dieser offenen Seite in die Form gegossen werden, bis der Beton ein initiale Befüllungsebene der Form erreicht. Die initiale Befüllungsebene ist hierbei mit Vorteil im Wesentlichen parallel zum Formboden angeordnet.

Das Verfahren umfasst weiter das Einbringen einer Armierung in die Form. Mit Vorteil wird die Armierung derart in die Form eingebracht, dass an mindestens einem vorgesehenen Installationsplatz in der Form ein Installationsteil an der Armierung platzierbar ist. Falls das Installationsteil zwei gegenüberliegende Befestigungselemente mit je mindestens einer Aufnahme aufweist, berücksichtigt der Installationsplatz vorteilhafterweise den hierzu benötigten Abstand von 120 mm - 200 mm, insbesondere 150 mm zwischen zwei Armierungsstäben. Nach dem Einbringen weist die Armierung einen definierten Abstand zu der vorgesehenen Betonsegmentoberfläche auf. Mit Vorteil weist der Bereich der Armierung, welcher zur Auflage an dem mindestens einen Befestigungselement vorgesehen ist, den zuvor beschriebenen zweiten Abstand zu der vorgesehenen Betonsegmentoberfläche auf. Ebenfalls kann die Armierung einen entsprechenden vorgesehenen Abstand zur initialen Befüllungsebene der Form aufweisen.

Das Verfahren umfasst ferner das Bereitstellen mindestens eines Installationsteils, wie oben beschrieben. Weiter umfasst das Verfahren das Anbringen des Installationsteils an der Armierung. Das Installationsteil wird hierbei mit Vorteil derart eingebaut, dass die erste Richtung des Installationsteils der zweiten Richtung der Form entspricht. Um eine korrekte Positionierung des Installationsteils zu der vorgesehenen Betonsegmentoberfläche, zu erzielen, kann das mindestens eine Befestigungselement über die Verbindungsstruktur derart mit dem Installationskörper wirkverbunden werden, dass der zuvor definierte zweite Abstand (der Anlagefläche zur Montageebene) im Bereich von 15 mm - 40 mm liegt, insbesondere 20 mm, 25 mm, 30 mm oder 35 mm, entspricht. Weiterhin kann das mindestens eine Befestigungselement über die Verbindungsstruktur derart mit dem Installationskörper wirkverbunden werden, dass das frontales Ende, insbesondere die Frontfläche, des Installationskörpers den in die erste Richtung vorgegebenen dritten Abstand zur Anlagefläche des mindestens einen Befestigungselementes an der Armierung aufweist. Für die Positionierung kann das Befestigungselement an einem entsprechend vorgesehenen Steckplatz mit der Verbindungsstruktur wirkverbunden werden. Das Befestigen des Installationsteils an der Armierung kann ferner über ein Umgreifungselement, wie oben beschrieben, geschehen.

Das Verfahren umfasst ferner das Giessen von Beton zur Bildung des Betonsegmentes nach der Positionierung des mindestens einen Installationsteils. Hierbei kann der Beton bis zu der initialen Befüllungsebene gegossen werden. Nach dem Aushärten des gegossenen Betonsegmentes kann die initiale Befüllungsebene demnach entlang der Betonsegmentoberfläche liegen. Für eine gute Verteilung des Betons kann dieser Beton jedoch zusätzlich z.B. durch Rütteln der Form verdichtet werden. Das Rütteln des Betons kann während des Giessens und/oder auch nach dem Giessen durchgeführt werden. Das Rütteln bewirkt, dass der Beton vor dem Aushärten nochmal absackt. In diesem Fall sackt die Oberfläche des flüssigen Betons von der initialen Befüllungsebene auf eine Erstarrungsebene ab. Die Erstarrungsebene liegt demnach nach dem Aushärten des Betons an der Betonsegmentoberfläche, während die initiale Befüllungsebene parallel zur Betonsegmentoberfläche (in die erste Richtung darüber) angeordnet ist.

Das Verfahren umfasst weiterhin das Entnehmen des ausgehärteten Betonsegments aus der Form.

Anhand der in den nachfolgenden Figuren gezeigten Ausführungsbeispiele und der dazugehörigen Beschreibung werden Aspekte der Erfindung näher erläutert. Es zeigen:
- Fig. 1: Ein Installationsteil gemäss einer ersten Ausführungsform in einer perspektivischen Explosionsansicht;
- Fig. 2: Ein Installationsteil gemäss der ersten Ausführungsform in einer perspektivischen Ansicht im montierten Zustand an der Armierung;
- Fig. 3: Eine erste Variante eines Befestigungselementes mit Verbindungsstruktur in einer Ansicht von der Seite;
- Fig. 4: Das Befestigungselement gemäss Figur 3 mit Verbindungsstruktur in einer perspektivischen Ansicht;
- Fig. 5: Eine zweite Variante eines Befestigungselementes mit Verbindungsstruktur in einer perspektivischen Ansicht;
- Fig. 6: Ein Installationsteil gemäss einer zweiten Ausführungsform in einer perspektivischen Ansicht.

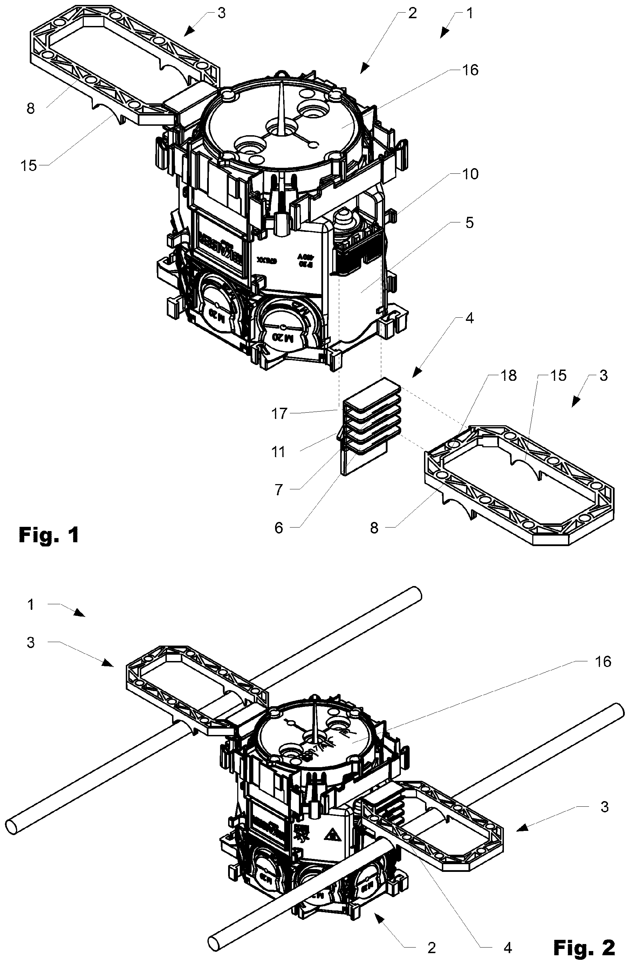

**Figur 1** und **Figur 2** zeigen ein Installationsteil 1 mit einem Installationskörper 2 in Form einer Installationsdose und zwei Befestigungselementen 3. **Figur 1** illustriert den Zusammenbau der Installationsdose 2 mit den Befestigungselementen 3. **Figur 2** zeigt das Installationsteils 1 anliegend an einer Armierung. Die Installationsdose 2 weist eine sich in eine erste Richtung erstreckende röhrenförmige Seitenwand 5 auf, welche einen Installationsraum für elektrotechnische Installationen umgibt. Die Installationsdose weist eine rückseitige Montageöffnung und eine vorderseitige Installationsöffnung auf, welche jeweils von einem Deckel verschlossen sind. Die Befestigungselemente 3 sind je über eine separat ausgestaltete Verbindungsstruktur 4 mit der Seitenwand 5 der Installationsdose 2 wirkverbunden. Im montierten Zustand stehen die Befestigungselemente 3 seitlich von der Seitenwand 5 der Installationsdose 2 ab. Im gezeigten Fall stehen die Befestigungselemente 3 senkrecht zu der ersten Richtung ab. Die Befestigungselemente 3 dienen zur Auflage des Installationsteils 1 an der Armierung des zu giessenden Betonsegmentes. Für eine einfache und schnelle Einstellung an eine Betondeckung können die Befestigungselemente 3 jeweils an mehreren alternativen Positionen mit der Verbindungsstruktur 4 wirkverbunden sein, wobei die mehreren alternativen Positionen in die erste Richtung hintereinander angeordnet sind.

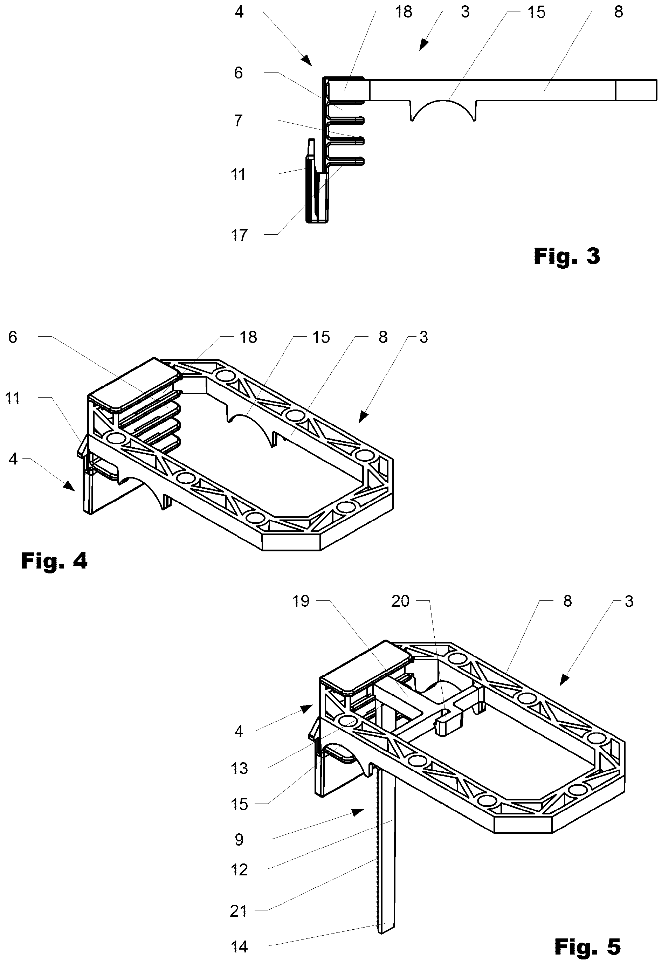

Die Befestigungselemente 3 können jeweils über die Verbindungsstruktur 4 mit dem Installationskörper 2 wirkverbunden werden. An der Seitenwand 5 des Installationskörpers 2, respektive der Installationsdose, ist hierzu ein (erstes) Rastelement 10 angeordnet, welches mit einem Gegenrastelement 11 angeordnet an der Verbindungsstruktur 4 wirkverbindbar ist. Das (erste) Gegenrastelement 11 angeordnet an der Verbindungsstruktur 4 kann wie gezeigt mindestens einen Rasthaken aufweisen. Durch die Befestigung der Befestigungselemente 3 an unterschiedlichen Positionen ist ein Abstand zwischen den Befestigungselementen 3 (respektive der Armierung im eingebauten Zustand) und einem frontalen Ende 16 des Installationskörpers 2 einstellbar. Im gezeigten Fall werden die mehreren alternativen Positionen durch Steckplätze 6 an der Verbindungsstruktur 4 gebildet. Die Steckplätze 6 dienen zur bereichsweisen Aufnahme des Befestigungselements 3. Die Steckplätze 6 werden in die erste Richtung von einer Abtrennung 17 voneinander getrennt. An der Abtrennung 17 befinden sich Rastmittel 7 zum Verrasten des Befestigungselementes 3 in dem Steckplatz 6. Das Befestigungselement 3 kann mit einem proximalen Ende 18 in den entsprechenden Steckplatz 6 gesteckt werden und ist nach der Verrastung fest mit dem Installationskörper 2 bzw. der Verbindungsstruktur verbunden. In der gezeigten Ausführungsform weist das Befestigungselement 3 (siehe **Figur 3** und **Figur 4**) einen aus der ersten Richtung betrachtet O-förmigen Steg 8 auf. Der Steg umfasst hierbei aus der ersten Richtung betrachtet eine äussere (O-förmige) und eine innere (O-förmige) Wandung. Zwischen der äusseren und der inneren Wandung, welche sich in die erste Richtung erstrecken sind Versteifungsrippen und hohlzylinderförmige Hülsen angeordnet. Auf dem Steg 8 kann zudem eine Aufnahme 15 z.B. in Form einer konkaven Mulde zur Auflage an der Armierung angeordnet sein (siehe **Figur 2**).

**Figur 5** zeigt eine weitere Variante eines Befestigungselementes 3 in einer perspektivischen Ansicht. In dieser Variante umfasst das Befestigungselement 3 einen Mittelsteg 19 mit einem Umgreifungselement 9. Der Mittelsteg 19 geht von dem proximalen Ende 18 des Befestigungselementes 3 ab und ist innerhalb einer Kontur des O-förmigen Steges 8 angeordnet ist. An dem Mittensteg 19 ist ein (zweites) Rastelement 20 und das Umgreifungselement 9 angeordnet. Das Umgreifungselement 9 ist hierbei mit einem ersten Ende 13 an dem Mittelsteg 19 angeformt. Zwischen dem ersten und einem zweiten Ende 13, 14 des Umgreifungselementes 9 sind auf einer flexible Zunge 12 mehrere (zweite) Gegenrastelemente 21 zur Verrastung mit dem Rastelement 20 angeordnet. Zur Montage wird die flexible Zunge 12 um einen Bereich der Armierung gelegt und anschliessend mit einem Gegenrastelement 21 an dem Rastelement 20 verrastet. Die in **Figur 1** und **Figur 2** gezeigte Variante eines Installationsteils 1 kann ebenfalls Umgreifungselemente 9, wie in **Figur 5** gezeigt, aufweisen.

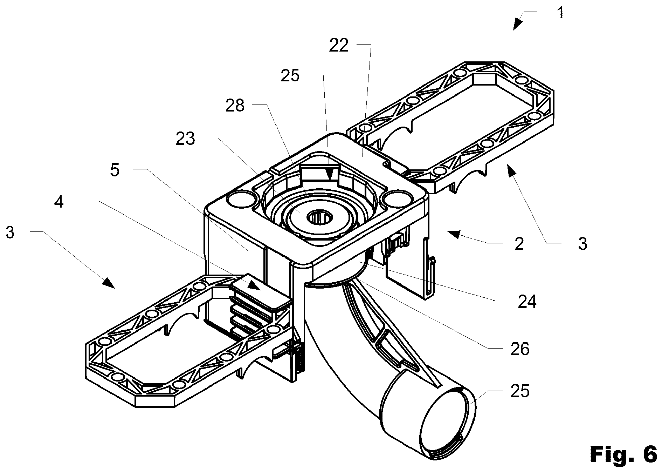

**Figur 6** zeigt eine zweite Variante eines Installationsteils 1 mit einem Installationskörper 2 mit zwei Befestigungselementen 3. Der gezeigte Installationskörper 2 ist ein Endübergangsteil, welches zur Überführung von Installationsleitungen in ein benachbartes Betonsegment dient. Der Installationskörper 2, respektive das Endübergangsteil, weist hierfür einen sich von einer ersten zur einer zweiten Mündung 25, 26 erstreckenden röhrenförmigen Grundkörper 24 auf. Die erste Mündung 25 kann hierbei in einer Frontfläche 22 zur Ausrichtung an einer Betonsegmentoberfläche angeordnet sein. Die Frontfläche 22 ist normal zu einer ersten Richtung ausgerichtet. Von der ersten Mündung 25 kann sich der röhrenförmige Grundkörper 24 zumindest bereichsweise in die erste Richtung erstrecken. An der zweiten Mündung 26 können Rastelemente zum Verrasten eines Rohrkrümmers 27 oder eines Installationsrohres angeordnet sein. Ebenfalls kann jedoch auch der röhrenförmige Grundkörper 24 bereichsweise gekrümmt ausgestaltet sein (nicht gezeigt). Im gezeigten Fall ist der Installationskörper 2 in einem initialen Zustand vor der Durchführung von Installationsleitungen gezeigt. Um den Innenraum vor Verschmutzung bis zur Montage der Installationsleitungen zu schützen kann der röhrenförmige Grundkörper 24, wie gezeigt, in dem initialen Zustand durch ein heraustrennbares Wandsegment 23 des Installationskörpers 2 verschlossen sein. Das Wandsegment 23 kann hierbei entlang einer Dünnstelle 28 heraustrennbar sein.

Der Installationskörper 2 weist zudem mindestens eine Seitenwand 5 auf. Diese kann von der Frontfläche 22 in die erste Richtung abragen. Im gezeigten Fall ragen insgesamt vier Seitenwände 5 von der Frontfläche 22 ab, welche somit den röhrenförmigen Grundkörper 24 zumindest bereichsweise umgeben. Die Frontfläche 22 und/oder die mindestens eine Seitenwand 5 und/oder der röhrenförmige Grundkörper 24 können integral verbunden sein. An der mindestens einen Seitenwand 5, können (erste) Rastelemente angeordnet sein, welche zur Wirkverbindung mit (ersten) Gegenrastelementen dienen. Die (ersten) Gegenrastelemente können ebenfalls an der mindestens einen Seitenwand 5 angeordnet sein. Mit Vorteil weist der Installationskörper 2 an gegenüberliegenden Seitenwänden 5 jeweils ein (erstes) Rastelement und (erstes) Gegenrastelement auf, sodass mehrere gleichgestaltete Installationskörper 2 nebeneinander über ein (erstes) Rastelemente und ein (erstes) Gegenrastelement wirkverbindbar sind. An den jeweiligen (ersten) Rastelementen, angeordnet an der mindestens einen Seitenwand 5 kann jedoch weiterhin eine Verbindungsstruktur 4 zum Anbringen eines Befestigungselementes 3, wie gezeigt, wirkverbunden werden. Die Befestigungselemente 3 dienen zur Auflage des Installationsteils 1 an der Armierung (nicht gezeigt) eines zu giessenden Betonsegmentes. Im montierten Zustand stehen die Befestigungselemente 3 dann seitlich von der entsprechenden Seitenwand 5 des Installationskörpers 2 ab. Im gezeigten Fall stehen die Befestigungselemente 3 senkrecht zur ersten Richtung ab. Die jeweilige Verbindungsstruktur 4 kann gleich wie die Verbindungsstruktur 4 der ersten Ausführungsform ausgestaltet sein. Die Befestigungselemente 3 können anlehnend an die erste Variante (s. **Figur 3** und **Figur 4**) oder zweite Variante (s. **Figur 5**) ausgestaltet sein. Je nach Ausgestaltung des Übergangselementes kann dieses zusätzlich mittels eines Magneten an der Schalung befestigt werden. Hierzu kann im Bereich der ersten Mündung eine Aufnahme zur Aufnahme eines Magneten angeordnet sein. Die Aufnahme kann konzentrisch zu dem heraustrennbaren Wandsegment angeordnet sein.

**LISTE DER BEZUGSZEICHEN**

| | | | |
|---|---|---|---|
| 1 | Installationsteil | 15 | Ausnehmung |
| 2 | Installationskörper | 16 | Frontales Ende |
| 3 | Befestigungselement | 17 | Abtrennung |
| 4 | Verbindungsstruktur | 18 | Proximales Ende |
| 5 | Seitenwand | 19 | Mittelsteg |
| 6 | Steckplätze | 20 | (Zweites) Rastelement |
| 7 | Rastmittel | 21 | (Zweites) Gegenrastelement |
| 8 | Steg | 22 | Frontfläche |
| 9 | Umgreifungselement | 23 | Wandsegment |
| 10 | (Erstes) Rastelement | 24 | Grundkörper |
| 11 | (Erstes) Gegenrastelement | 25 | Ersten Mündung |
| 12 | Flexible Zunge | 26 | Zweiten Mündung |
| 13 | Erstes Ende | 27 | Rohrkrümmer |
| 14 | Zweites Ende | 28 | Dünnstelle |

## Patentansprüche

1. Installationsteil (1) zum Einbau in einem zu giessenden Betonsegment umfassend
a. einen Installationskörper (2) zur Einführung und/oder Durchführung von Installationsleitungen mit mindestens einer Seitenwand (5), welche sich in eine erste Richtung erstreckt,
b. mindestens ein Befestigungselement (3) zur Befestigung des Installationskörpers (2) an einer Armierung des zu giessenden Betonsegments, wobei das Befestigungselement (3) in einem montierten Zustand seitlich von dem Installationskörper (2) absteht, und
c. eine Verbindungsstruktur (4) zum Wirkverbinden des mindestens einen Befestigungselementes (3) mit dem Installationskörper (2), wobei
d. das Befestigungselement (3) an mehreren alternativen Positionen mit der Verbindungsstruktur (4) wirkverbindbar ist, wobei die mehreren alternativen Positionen in die erste Richtung hintereinander angeordnet sind.

2. Installationsteil (1) gemäss Patentanspruch 1, **dadurch gekennzeichnet, dass** die Verbindungsstruktur (4) mehrere Steckplätze (6) zur bereichsweisen Aufnahme des Befestigungselements (3) aufweist, wobei jeder Steckplatz (6) eine der alternativen Positionen entspricht.

3. Installationsteil (1) gemäss Patentanspruch 2, **dadurch gekennzeichnet, dass** in den jeweiligen Steckplätzen (6) mindestens ein Rastmittel (7) zu Verrastung des Befestigungselements (3) mit der Verbindungsstruktur (4) angeordnet ist.

4. Installationsteil (1) gemäss einem der vorangehenden Patentansprüche, **dadurch gekennzeichnet, dass** das Befestigungselement (3) mindestens einen Steg (8) zur Auflage auf der Armierung aufweist.

5. Installationsteil (1) gemäss Patentanspruch 4, **dadurch gekennzeichnet, dass** der mindestens eine Steg zumindest bereichsweise profiliert ist und/oder Versteifungsrippen umfasst.

6. Installationsteil (1) gemäss Patentanspruch 4 oder 5, **dadurch gekennzeichnet, dass** der mindestens eine Steg aus der ersten Richtung betrachtet U-förmig oder O-förmig ausgestaltet ist.

7. Installationsteil (1) gemäss einem der vorangehenden Patentansprüchen, **dadurch gekennzeichnet, dass** das Befestigungselement (3) mindestens ein Rastelement (20) zur Verrastung mit einem Umgreifungselement (9) aufweist, welches in einem montierten Zustand des Installationsteils (1) an der Armierung einen Bereich der Armierung zumindest teilweise umgreift.

8. Installationsteil (1) gemäss Patentanspruch 7, **dadurch gekennzeichnet, dass** das Installationsteil (1) das Umgreifungselement (9) umfasst und dieses einstückig mit dem Befestigungselement (3) ausgeführt ist.

9. Installationsteil (1) gemäss Patentanspruch 8, **dadurch gekennzeichnet, dass** das Umgreifungselement (9) eine flexible Zunge (12) umfasst.

10. Installationsteil (1) gemäss Patentanspruch 9, **dadurch gekennzeichnet, dass** die flexible Zunge an einem ersten Ende (13) angeformt ist und mindestens ein Gegenrastelement (21) zur Verrastung mit dem Rastelement (20) umfasst.

11. Installationsteil (1) gemäss Patentanspruch 8, **dadurch gekennzeichnet, dass** das Umgreifungselement (9) U- förmig ausgestaltet ist und an seinen Schenkeln (15) jeweils mindestens ein Gegenrastelement (21) zur Verrastung mit zwei Rastelementen (20) des Befestigungselementes (3) umfasst.

12. Installationsteil (1) gemäss einem der Patentansprüche 7 bis 11, **dadurch gekennzeichnet, dass** das Umgreifungselement (9) aus der ersten Richtung innerhalb einer Kontur des Befestigungselementes (3) angeordnet ist.

13. Installationsteil (1) gemäss einem der vorangehenden Patentansprüche, **dadurch gekennzeichnet, dass** die Verbindungsstruktur (4) separat ausgestaltet ist und an dem Installationskörper (2) anrastbar ist.

14. Installationsteil (1) gemäss einem der vorangehenden Patentansprüche 1 bis 12, **dadurch gekennzeichnet, dass** die Verbindungsstruktur (4) an dem Installationskörper (2) angeformt ist.

15. Installationsteil (1) gemäss einem der vorangehenden Patentansprüche, **dadurch gekennzeichnet, dass** der Installationskörper (2) eine Installationsdose oder ein Endübergangsteil oder eine Haltevorrichtung für Installationsrohre ist.

16. Verfahren zum Herstellen eines Betonsegmentes mit mindestens einem Installationsteil (1) umfassend die folgenden Verfahrensschritte:
a. Bereitstellen einer Form zum Giessen des Betonsegmentes umfassend einen Formboden und mindestens eine Formseitenwand;
b. Bereitstellen mindestens eines Installationsteiles (1) gemäss einem der Patentansprüche 1 - 15,
c. Einbringen einer Armierung in die Form;
d. Wirkverbinden des mindestens einen Befestigungselementes (3) über die Verbindungsstruktur (4) an dem mindestens einen Installationskörper (1);
e. Befestigen des mindestens einen Installationsteiles (1) an der Armierung, sodass ein frontales Ende (16) des Installationskörpers (1) einen in die erste Richtung vorgegebenen Abstand zur Armierung aufweist;
f. Giessen von Beton in die Form zur Bildung des Betonsegmentes;
g. Entnahme des Betonsegmentes aus der Form.

17. Verfahren gemäss Patentanspruch 16, **dadurch gekennzeichnet, dass** das Installationsteil (1) mittels eines Umgreifungselementes (9) an einem Bereich der Armierung befestigt wird.

18. Betonsegment umfassend mindestens ein Installationsteil (1) gemäss einem der vorangehenden Ansprüche 1 bis 15.
